# EUROPEAN PATENT SPECIFICATION

(11) **EP 0 852 542 B1**
(45) Date of publication and mention of the grant of the patent: **20.02.2002**
(21) Application number: 96915348.5
(22) Date of filing: 25.04.1996
(51) Int. Cl.: B43L 7/00, G01B 3/00

(54) **IMPROVED TRANSPARENT MEASURING DEVICE AND METHOD OF MAKING**
VERBESSERTE TRANSPARENTE VORRICHTUNG ZUM MESSEN UND HERSTELLUNGSVERFAHREN
DISPOSITIF DE MESURE TRANSPARENT AMELIORE ET SON PROCEDE DE FABRICATION

(30) Priority: 05.09.1995 US 2773
(43) Date of publication of application: 15.07.1998
(73) Proprietor: Schafer, Randal D., Concrete, WA 98237 (US)
(72) Inventor: Schafer, Randal D., Concrete, WA 98237 (US)
(74) Representative: Pratt, David Martin
(86) International application number: US9605759
(87) International publication number: WO9709179

(56) References cited:
- FR-A- 753 009
- JP-A- 59 067 401
- US-A- 2 171 504
- US-A- 2 459 694
- US-A- 2 463 868
- US-A- 3 812 779
- US-A- 4 750 270
- US-A- 4 779 346
- US-A- 4 942 670

## Description

This application claims the benefit of prior U.S. Patent No. 5, 819, 422 filed on September 5, 1995.

### TECHNICAL FIELD

The present invention pertains to rulers and cutting guides, and, more particularly, to an improved transparent measuring device having multicolor graduations formed thereon and methods of making the same.

### BACKGROUND OF THE INVENTION

The present invention is related to applicant's Transparent Measuring Device with Multicolored Lines that is the subject of U.S. Pat. No. 4,779,346. As described therein, the measuring device uses a novel formation of composite lines to enhance the visibility of the lines against a multicolor background. More particularly, each composite line is formed from two adjacent lines of contrasting colors or hues.

One embodiment of the previous invention disclose in the US patent has been marketed by Omnigrid, Inc., under the trademark Omnigrid ®. This embodiment uses a pattern of composite vertical lines and composite horzontal lines that form squares. Each composite line is formed of a first line of a first color and a second line of a second color, different to that of the first color, such that the composite lines will be visible against backgrounds of various colours. The first line is preferably of a lesser breadth than the second line and is superimposed on the second line so that the second line is visible on each side of the first line, and either line will be visible against a multicolored background.

The manufacturing process for this previous device involves several steps. By way of simplified explanation, dark-shade green lines are applied to the back side of a sheet of transparent material, typically by the silk screening method. Yellow lines, which are wider than the dark-shade green lines, are then applied on top of selected dark-shade green lines. Because the yellow lines are wider, they appear on both sides of the dark-shade green lines, resulting in a two-color composite line. To insure uniformity in the appearance of the yellow lines on both sides of the dark-shade green lines, the wider yellow line must be precisely centered over the dark-shade green line. Imprecise centering of the yellow line will result in an irregular appearing composite line that can be confusing to the eye and interfere with precise alignment and measurement.

US Patent No. 4, 750, 270 discloses a measuring ruler having a straight edge and a set of indicia adjacent the edge. The indicia comprise a series of first and second measuring marks of equal with, ion side-by-side alternating arrangement, normal to the edge. The color of the first marks is in stark contrast to the color of the second marks. The aim for the invention disclose in this patent was to overcome difficulties of readibility of small scale measurements.

With the silk screen printing method, great care must be used in aligning the images on the screens and in applying the pigment in order to have precisely centered lines. Minor variations in technique will result in misalignment of the lines. For example, a small change in the speed of the squeegee or the pressure applied to the squeegee will cause variations in the appearance of the line. In addition, changes in the tautness of the screen and in the viscosity of the pigment will yield non-uniform lines. The alignment of the lines is also affected by environmental factors, such as temperature and humidity, which must be carefully controlled to keep the alignment within close tolerances.

In order to avoid these adverse factors during the manufacturing process, great care must be taken to stabilize the environment, maintain precise alignment of the equipment, and utilize trained and experienced personnel in the transferring of the images to the sheet of transparent material. However, even with these controls, unacceptable variations can occur, resulting from such things as an operator's fatigue or illness, as well as interruptions and distractions.

Consequently, there is a need for a process that requires less precision and results in an improved measuring device having uniformly appearing lines. Such a process should permit greater latitude in aligning images, enable the use of relatively unskilled labor, require less time in setting up equipment, and speed up the process of creating and printing or transferring the line images. In addition, such a process should be adaptable to other forms of manufacturing and printing, including, but not limited to, lithographic printing, lamination of a printed sheet to another sheet, laser etching, resist plating, use of UV-cured adhesive ink, and the use of high speed ink jet and laser printers, as well as printing on the front ("right reading") or back (reverse or "wrong reading") of a transparent sheet.

### Brief Description of the Drawings

FIGURE 1 is a partial front view of a prior transparent measuring device with multicolor lines;
FIGURE 2 is a top plan view of the first image to be applied to the sheet of transparent material in accordance with the present invention;
FIGURE 3 is a top plan view of the second image to be applied to the sheet of transparent material in accordance with the present invention;
FIGURE 4 is a top plan view of a third image to be applied to the sheet of transparent material in accordance with another embodiment of the present invention;
FIGURE 5 is an isometric view of a screen printing apparatus for printing images in accordance with the process of the present invention;
FIGURE 6 is a top plan view of a first image to be applied to a sheet of transparent material in accordance with an alternative embodiment of the present invention;
FIGURE 7 is a top plan view of a second image to be applied to the sheet of transparent material in accordance with the alternative embodiment of FIG. 6;
FIGURE 8 is a top plan view of an optional third image to be applied to a sheet of transparent material in accordance with the alternative embodiment of FIGS. 6 and 7; and,
FIGURE 9 is a top plan view of the composite image formed in accordance with the alternative embodiment of FIGURES 6-8.

### DETAILED DESCRIPTION

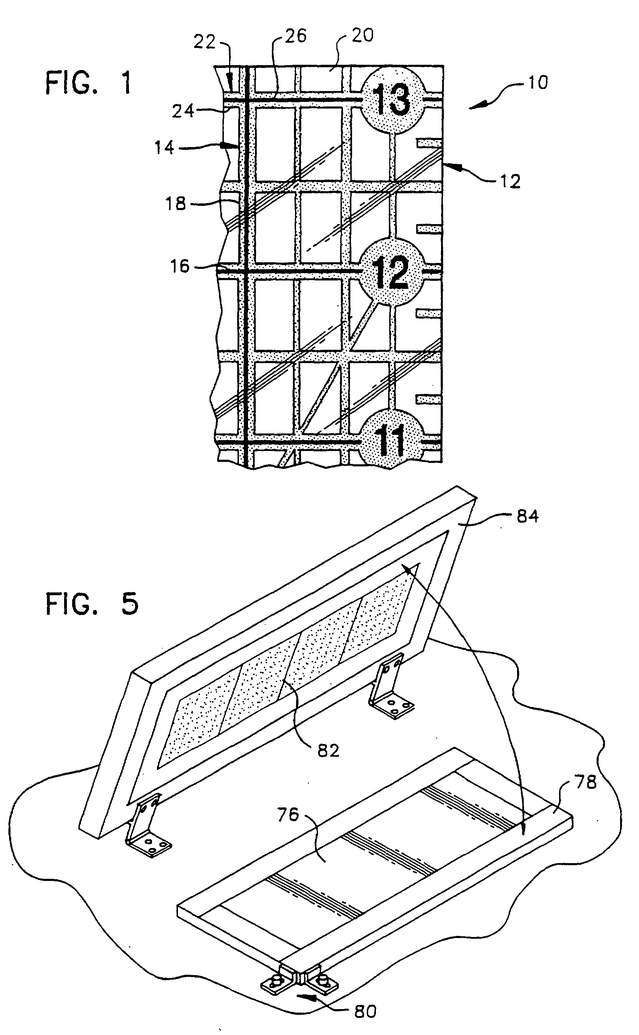

Referring first to FIGURE 1, illustrated therein is a portion of a transparent measuring device 10 formed from a transparent sheet 12 having composite multicolor lines 14 formed in accordance with previous methods. The lines 14 are formed from a first line 16 of a darker color or hue and a second line 18 of a contrasting lighter color or hue. Preferably, the second line 18 is of a greater width than the first line 16, so that as the second line 18 is applied over the first line 16, the second line 18 will be visible on both sides of the first line 16 when viewed from the front surface 20 of the sheet 12.

As previously described, this method of forming the multicolor lines 14 must be done with precision in order to avoid misalignment of the lines. For example, multicolor line 22 in FIGURE 1 is misaligned, resulting in more of the lighter line being visible on the upper portion 26 than on the lower portion 24 of the line 22.

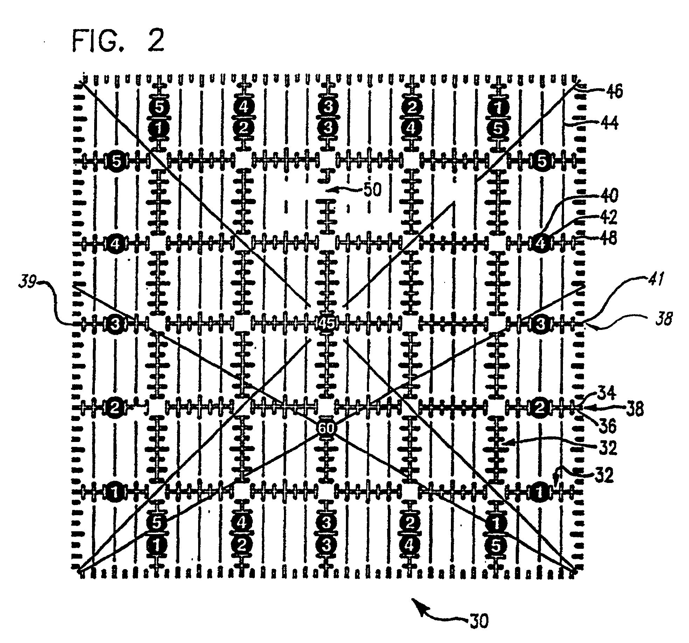

The measuring device and process of making of the present invention overcomes this imprecision. Referring next to FIGURE 2, shown therein is a first image 30 consisting of a pattern of horizontal and vertical graduations 32 with short subdivisions 48 extending therefrom at substantially right angles. Each graduation 32 and subdivision 48 is formed from a pair of lines 34 and 36 that outline an uncolored gap 38.

Ideally, the lines 34 and 36 have a width in the range of 2.5406x10⁻⁵ m to 5.0812x10⁻⁴ m (0.001 inches to 0.02 inches), although the width could be greater depending on the application. The preferable width for quilting applications is in the range of 3.8109x10⁻⁴ m to 5.0812x10⁻⁴ m (0.015 inches to 0.020 inches). The uncolored gap 38 is centered between the pair of lines 34 and 36, and has a preferred width of 5.0812x10⁻⁵ m (0.0022 inches), although again this could be smaller or larger, depending on the application and the capabilities of the image creation equipment. This provides the manufacturer and operator with greater tolerances within which to transfer the images and yet maintain precise alignment.

Ideally, the uncolored gaps 38 are bounded on substantially all sides by the pair of lines 34 and 36, and they are disposed centrally therein. The longitudinal ends 39 and 41 of the gaps 38 are not bounded, and there may be applications where there are segments that are unbounded along the length of the composite lines. There may also be applications where it is preferred that the gaps 38 not be centered between the pair of lines 34 and 36. Hence, variations are contemplated in the present invention.

The first image 30 includes large darkened circles 40 have uncolored number spaces 42 formed therein. In addition, the first image 30 includes solid vertical lines 44, and angled lines 46 that are of the same color as the graduations 32, although they do not form a part of the multicolor graduations 32. The large blank area 50 is used for the Omnigrid trademark, which is discussed more fully below.

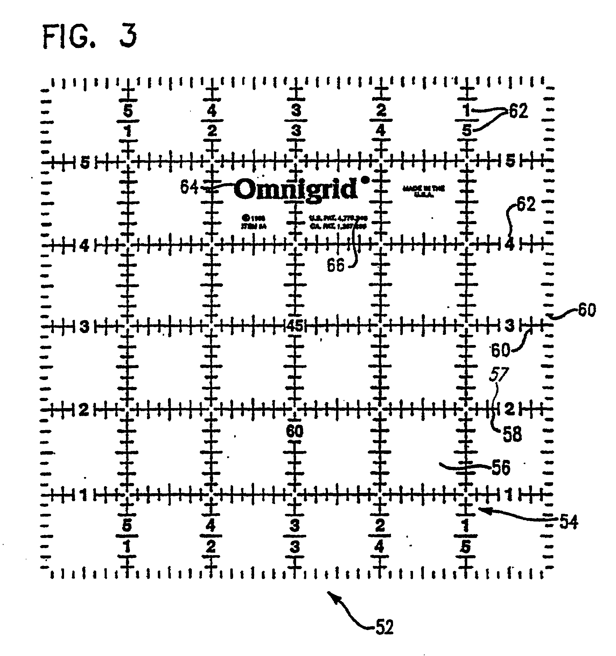

Referring next to FIGURE 3, shown therein is a second image 52 comprising solid horizontal lines 57 and vertical lines 58 forming a grid pattern 54 of squares 56. This second image 52, as well as the first image 30, is shown in the form it would appear on camera-ready film. Each of these lines 57 and 58 has subdivision lines 60 that further divide the lines 58 into smaller units of measurement. In addition, each of the lines 57 and 58 has corresponding numbers 62 along the outside rows and columns of squares 56. In the embodiment depicted herein, these numbers 62 correspond to inches, although other units of measurement may be used, such as metric units. The Omnigrid trademark 64 and other legends and indicia 66 appear inside the squares 56.

Ideally, the lines 57 and 58 have a width that is 5.0812x10⁻⁵ m (0.002 inches) wider than the width of the uncolored gap 38 formed by the graduations 32. In other words, if the uncolored gap 38 is 3.04872x10⁻⁴ m (0.012 inches) wide, the lines 57 and 58 would be 3.55684x10⁻⁴ m (0.014 inches) wide. In addition, the numbers 62 are preferably 5.0812x10⁻⁵ m (0.002 inches) larger than the corresponding uncolored numbers spaces 42 formed in the circles 40 on the first image 30. The intersection of the horizontal and vertical lines 57 and 58 is left blank to provide an unobstructed viewing space that enables a user to precisely align the measuring device.

When the first and second images 30 and 52 are combined, they form a composite image, as will be described more fully below in conjunction with FIGURE 11. Briefly, the first image 30 is applied to the back surface of a transparent sheet, and the second image 52 is aligned and applied on top of the first image 30. When the images 30 and 52 are so combined, the contrasting colored second image 52 fills in the gaps 38 and number spaces 42 on the first image 30, creating a composite set of lines.

The process for making the transparent measuring device of the present invention can be done by a variety of methods. Although the use of ink to create the images is described herein, other materials or processes may be used, including pigment, toner, photographic deposit, and photosensitive emulsion.

The preferred method is the screen printing process because it permits the application of a heavy deposit of ink. By way of general description, in the process of the present invention, the images described above are first created and then transferred to a screen. The screen is a commercially-available material that has a thread count in the range of 150 to 400 threads per 0.25406 m (one inch).

Ideally, the images 30 and 52 are created as electronic images on a computer using a commercially-available graphics program that is capable of large magnification and line generation down to and even below 2.5406x10⁻⁵ m (0.001 inch). Each electronic image is then generated on to camera-ready film, such as is shown in FIGURES 2 and 3, after which it is transferred to a screen through a photo emulsion process, which is well-known in the industry.

Alternatively, present methods do permit the direct transfer of an electronic or computer image to a print screen, bypassing the step of using an ortho film, although this is much more expensive. In addition, a lithograph press, an engraving process, thermal (hot) stamping of foil, or a photographic process may also be used, as well as any combination of graphics and manufacturing. Finally, high-speed laser printers that print the computerized image directly to a plastic sheet are also available. Virtually any pigment transfer method may be used to generate the images of the present invention on the transparent sheet. Another method takes advantage of precision cutting equipment to cut out pre-printed adhesive plastic that can be applied as a layered substrate to the transparent sheet.

Continuing with the method of the present invention, once the screen is formed for the first image 30, it is mounted in accordance with conventional screen printing methods. A sheet of transparent material, preferably acrylic, such as the sheet 12 described above, is placed below the screen in a jig that holds the plastic sheet in place, as will be described in more detail below. The ink is then applied with a squeegee as is well-known in the art. It is important that the sheet of plastic be cleaned prior to the application of ink. A quick method is to use a roller on the sheet, which picks up dirt and other material off the sheet.

In the method of the present invention, the image 30 of FIGURE 1 is first applied to the back side of the sheet 12. It is preferable that the first image be of a lighter color or hue, such as yellow. However, a darker or contrasting color or hue can be used for the first image, such as black or dark-shade green. When so applied to the sheet 12, the graduations 32 outline the uncolored gap 38 with uncolored subdivisions 48. In addition, the circles 40 have uncolored numbers 42 formed therein. The image 32 is then inspected and, if acceptable, set aside to dry.

After the ink from the first image has dried, the screen having the second image 52 thereon is mounted and aligned with the first image 30. Alignment is much quicker and easier, because the lines 58 and numbers 62 will cover the corresponding uncolored areas with a slight overlap. This overlap allows a small error in the alignment without resulting in misalignment of the lines 58 and numbers 62 in the corresponding uncolored gaps 38 and number spaces 42 created by the first image. The second image is then printed on the sheet using a contrasting darker color or hue. When viewed from the front surface 20 of the sheet 12, the darker lines 58 and numbers 62 will register perfectly within the gap 58 and number spaces 42 in the wider lighter line, even though the second image 52 may be slightly misaligned.

This application of the second image 52 is not an overlay of ink over the first image. Rather, it is the application of ink in the blank, uninked areas or gaps 38 left by the first image 30, and only a slight overlap exists. As such, this method not only results in precise registration of the smaller darker line within the larger lighter line, it also reduces bleeding of one color into the other as can occur with an overlay. If the color of the first image 30 is totally opaque, then the second image 52 can have a width of 5.0812X10⁻⁵ m (0.002 inches) less than the width of the first image 30.

It has been noted that confusion as to which side of the sheet is the top side may result from having the contrasting colors visible from both sides of the sheet of transparent material. One method for overcoming this confusion is to apply an overlay of one color on the first two images, thus making only the overlay visible from the back side of the transparent sheet.

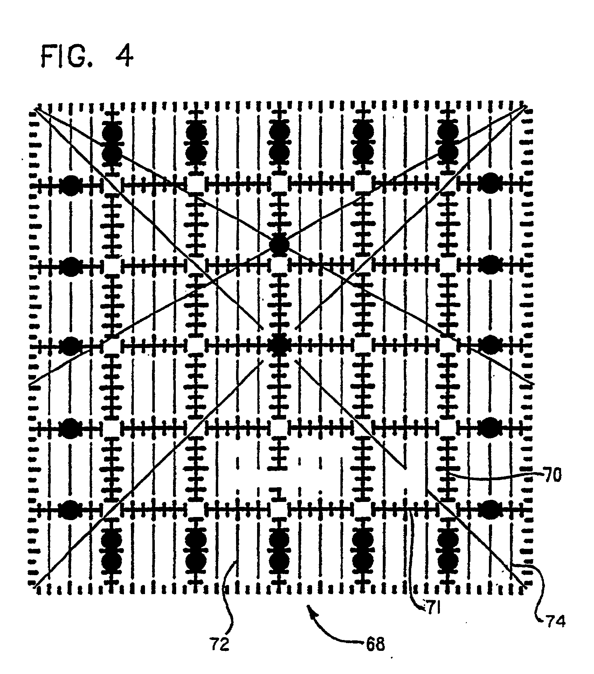

In this regard, FIG. 4 illustrates a third image 68 that consists of a grid pattern of thick, solid vertical lines 70 and horizontal lines 71 that are wider than the solid lines 57 and 58 of the second image 52 and slightly smaller than the graduations 32 and other lines 44 and 48, and circles 40 in the first image 32. Additional vertical lines 72 and angled lines 74 are used, which are also of a smaller width than the corresponding vertical lines 44 and angled lines 46 shown in FIGURE 2.

Ideally, the lines 70 are 25.4 to 50.8 µm (1 to 2 one-thousandths of an inch) smaller than the corresponding lines in the first image 30. This third image 68 can be applied over the second image 52 as an overlay. This overlay encapsulates the first two images 30 and 52, improving the appearance and protecting the images, thus increasing the useful life of the measuring device 10. It also aids users in determining which side of the measuring device 10 is the front side because the overlay only permits the viewing of the composite multicolor lines from the front side 20. The third image 68 ideally is of a color or hue that matches the first image 30, in this case a lighter color, such as yellow.

As a result of adding the overlay, another step is added to the process. Because the third image 68 is slightly smaller, minor misalignment will not be detected. Even though a third step is added in this embodiment, the overall efficiency and speed is still improved over the prior method. In addition, fewer rejections will result and a high-quality product will be produced virtually each run. However, the third image may not be necessary, such as in the lithographic process, where the second image (black in this case) is of a width to cover the entire or almost the entire first image ( yellow in this case).

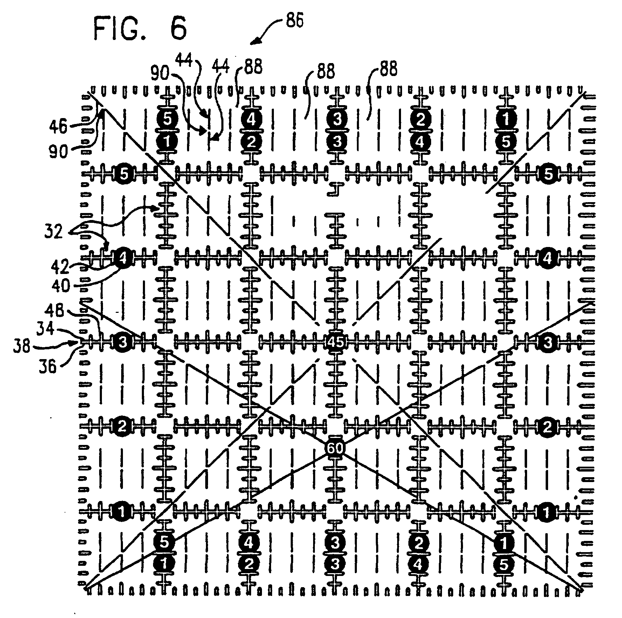

FIGURE 5 illustrates a screen printing apparatus for carrying out the method of the present invention. In particular, shown therein is a plastic sheet 76 placed in a jig 78 that holds the sheet 76 in place. The screen 78 is mounted in correlators or registration clamps 80. The clamps 80 may be adjusted to position the screen precisely in position over the plastic sheet 76. The jig 78 also includes similar adjustment mechanisms (not shown) for making minor adjustments in the position of the sheet 76.

The screen 78 is rotated into position over the plastic sheet 76 where ink is applied and a squeegee pushes the screen 78 down on the plastic sheet 76, as is well known in the art. The sheet with the image printed thereon is then removed.

As will be appreciated from the foregoing, the present invention results in a higher production rate using less-skilled labor that achieves the same or better quality product. It is also to be appreciated that changes made be made without departing from the scope of the claims. For instance, the steps described above may be reversed. with the third image 68 applied to the sheet first, then the second image 52, and finally the first image 30. Alternatively, the third image can be eliminated and the first two images used. If the reverse steps are done, the images must be applied to the front side of the sheet so the second and first images will be visible. The drawback to this method is the possibility of parallax errors in viewing the lines on the top of a thick sheet of transparent material.

While a thick piece of material is preferred in order to act as a cutting guide for rotary cutters, scissors, razors, and other cutting tools, as well as a measuring and marking device, the present invention can be applied to sheets of thinner material that are then laminated together. For example, rolled sheets of 127 µm (5 mil) plastic can be printed by one of several methods described above, then cut and adhesively applied to thin or thick transparent plastic sheets. Ultrasonic adhesion of Mylar or similar substrates may also be done, and a single color may be applied to any combination of the two substrates and then aligned prior to bonding of the substrates.

FIGURES 6-9 illustrate another embodiment and further improvement in accordance with the present invention. For ease of illustration, the same reference numbers will be used for the common subject matter illustrated in FIGURES 2-4 and 6-9. Shown in FIGURE 6 is a first image 86 wherein the solid vertical lines 44 in each square 88 are broken at their vertical midpoint to leave an open gap 90. Each angled line 46 is also broken at their junction with a vertical line 44 to leave the gap 90 open. In all other respects the first image 86 is identical to the first image 30 illustrated in FIGURE 2. It is to be understood that the vertical lines may have more than one gap 90 formed therein. The gaps 90 may appear at regular or irregular intervals depending on the application, the scale, and the overall design.

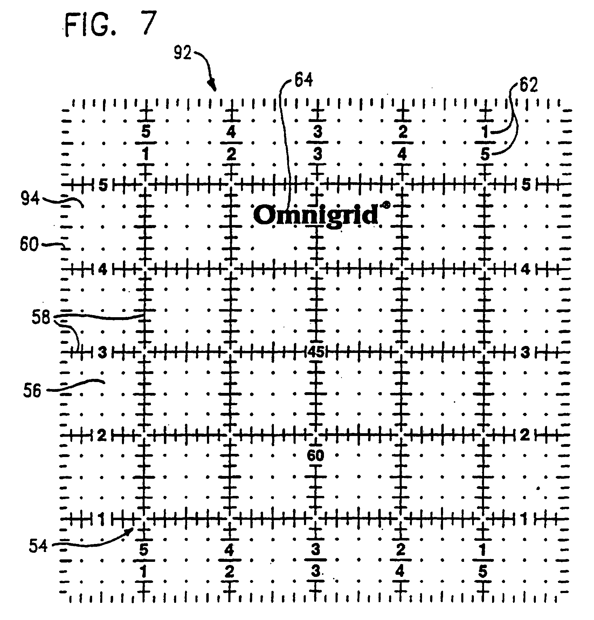

FIGURE 7 illustrates a second image 92 having squares 56 that include a plurality of dots 94. The dots 94 are positioned in each square 56 such that when the second image 92 is applied over the first image 86, the dots 94 will be located in the gaps 90 created in the vertical lines 44. Ideally, the dots 94 are of a larger size than the gaps 90 and of a contrasting color from the solid vertical lines 44 so they will be more readily visible to the user. These dots 94 will aid in aligning and measuring subdivisions on the transparent measuring device. It is to be understood that the dots 94 maybe the same size or smaller than the gaps 90 if desired.

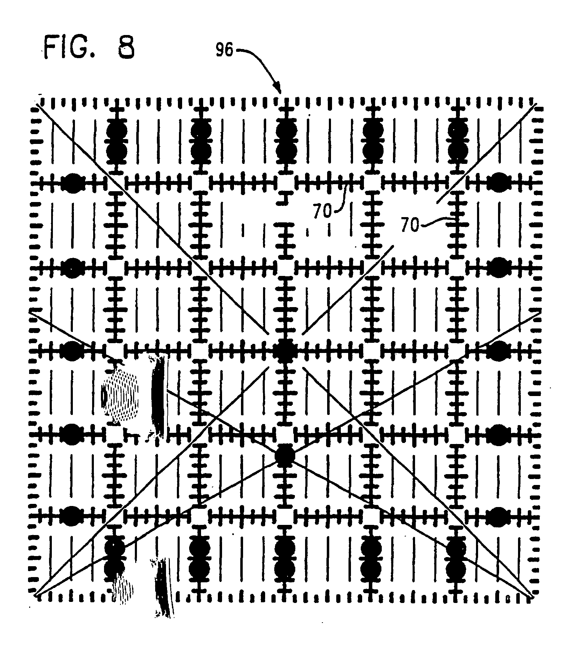

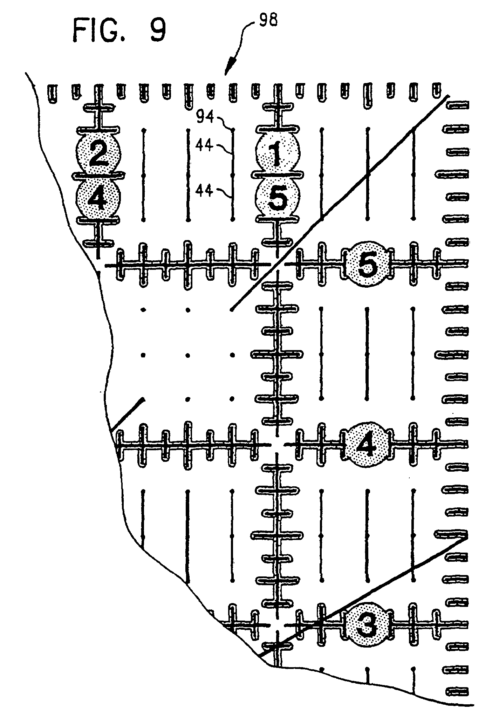

An optional third image 96 is shown in FIGURE 8, which corresponds to the third image 68 illustrated in FIGURE 4. The final composite image 98 consisting of the combination of the first image 86, the second image 92, and the third image 96, is shown in FIGURE 9, where the dots 94 are visible between the broken solid vertical lines 44 and the angled lines 46. The process described above can be reversed if the composite image is to be applied to the opposite side of the transparent sheet.

## Claims

1. A transparent measuring device, comprising:
a sheet of transparent material having opposing surfaces;
at least one or more multicolor continuous composite lines applied to one of said opposing surfaces on said sheet, each of said multicolor continuous lines comprising a first image and a second image, the first image and second images having contrasting colors, said first image comprising at least one line having a colored area with a centrally-disposed uncolored blank area formed inside said colored area and said second image being sized and shaped to at least completely fill said centrally-disposed uncolored blank area.

2. A device as claimed in claim 1, wherein said first image is applied to a surface of said sheet of transparent material and said second image is applied on top of said first image such that said second image completely fills said centrally-disposed uncolored blank area.

3. A device as claimed in claim 2, wherein said opposing surfaces of said sheet of transparent material comprise a front surface and a back surface, and wherein said first and second images are applied to said back surface.

4. A device as claimed in claim 1, wherein said sheet of transparent material comprises a first transparent sheet of material and a transparent laminate having a first side with said multicolor lines formed thereon and an opposing second side structured to be attached to said first transparent sheet of material.

5. A device as claimed in claim 4, wherein said first image is applied to said first side of said laminate and said second image is applied on said first image to completely fill said centrally-disposed uncolored blank area in said first image.

6. A device as claimed in claim 1, wherein said one or more multicolor continuous lines include integrally-formed multicolor graduations extending laterally therefrom.

7. A device as claimed in claim 1, wherein said opposing surfaces comprise a front surface and a back surface, and wherein said first image is applied to said front surface and said second image is applied on said first image such that said second image completely fills said blank area in said first image.

8. A transparent measuring device for use in measuring, marking, and cutting material, comprising:
a sheet of transparent material having opposing surfaces;
one or more composite continuous lines formed on said sheet of transparent material, each of said composite continuous lines comprising a first image and a second image, said first and second images formed of contrasting colors, said first image formed to have at least one line with a colored area and with a centrally-disposed longitudinal uncolored area formed inside said colored area, and said second image having at least one colored area sized and shaped to at least completely fill said at least one uncolored area.

9. A device as claimed in claim 8, wherein one or more of said composite continuous lines include integrally-formed composite graduations extending laterally therefrom.

10. A device as claimed in claim 8, wherein said sheet of transparent material comprises a front surface and a back surface, and wherein said one or more composite lines are formed on said back surface.

11. A device as claimed in claim 8, wherein said first image is applied to said back surface and said second image is applied to said first image to completely fill said at least one uncolored area.

12. A device as claimed in claim 11, wherein said composite lines each comprise a third image of the same color as said first image and sized and shaped to be no larger than said first image, and wherein said third image is applied on said first and second images.

13. A device as claimed in claim 8, wherein said sheet of transparent material comprises a front surface and a back surface, and wherein said one or more composite lines are applied to said front surface.

14. A device as claimed in claim 13, wherein said second image is applied to said front surface and said first image is applied on said second image such that said second image completely fills said at least one uncolored area in said first image.

15. A device as claimed in claim 8, wherein said sheet of transparent material comprises a first transparent sheet of material and a thin transparent sheet affixed to said first transparent sheet of material, said thin transparent sheet having said one or more composite lines formed thereon.

16. A device as claimed in claim 15, wherein said first transparent sheet of material has a front surface and a back surface, and wherein said thin transparent sheet is affixed to said front surface of said sheet of transparent material.

17. A device as claimed in claim 15, wherein said first transparent sheet of material has a front surface and a back surface, and wherein said thin transparent sheet is affixed to said back surface.

18. A method of forming continuous, multicolor composite lines on a transparent measuring device, comprising the steps of:
forming a first image comprising one or more colored areas with one or more centrally-disposed uncolored areas disposed therein and forming a second image having one or more colored areas sized and shaped to at least completely fill one or more of the uncolored areas in the first image; and
transferring the first and second images to the sheet of transparent material to form a composite image wherein the first image and the second image are of contrasting colors and the second image at least completely fills the one or more of the uncolored areas of the first image with a contrasting color.

19. A method as claimed in claim 18, wherein forming the first and second images further comprises forming a third image sized and shaped to be no larger than the first image, and the step of transferring further comprises transferring the third image to the sheet of transparent material so that the third image is applied over the first and second images and is of the same color as the first image.

20. A method as claimed in claim 18, wherein forming the first and second images further comprises forming the first and second images electronically and storing the electronically-created images on an electronic storage device, and wherein said step of transferring the first and second images further comprises transferring the electronically-stored images to the sheet of transparent material.

21. A method as claimed in claim 18, wherein transferring the first and second images comprises applying the first image to a first screen and applying the second image to a second screen, and then using the screen printing process to apply the images on the first and second screens to the sheet of transparent material.

22. A method as claimed in claim 19, wherein the steps of transferring the first and second images comprises the steps of applying the first image to a first screen, applying the second image to a second screen, applying the third image to a third screen, and using the screen printing process to apply the image on the first screen to the back surface of the sheet of transparent material, then to apply the image on the second screen onto the first image on the back surface of the sheet of transparent material, and then to apply the third image onto the second and first images on the back surface of the sheet of transparent material.

23. A method as claimed in claim 18, wherein transferring the first and second images comprises applying the first image to a first screen and applying the second image to a second screen, and then using the screen printing process to apply the second image on the second screen to the front surface of the sheet of transparent material, and then to apply the first image on the first screen to the front surface of the sheet of transparent material.

## Patentansprüche

1. Transparente Meßvorrichtung, umfassend:
ein Blatt aus transparentem Material mit entgegengesetzten Oberflächen;
mindestens eine oder mehrere mehrfarbige, kontinuierliche zusammengesetzte Linien, die auf einer der entgegengesetzten Oberflächen des Blattes aufgebracht sind, von denen jede mehrfarbige, kontinuierliche Linie ein erstes Bild und ein zweites Bild aufweist, die kontrastierenden Farben haben, wobei das erste Bild mindestens einer Linie mit einem gefärbten Bereich und einem zentral angeordneten, ungefärbten Leerbereich innerhalb des gefärbten Bereiches aufweist und das zweite Bild so bemessen und gestaltet ist, daß es mindestens vollständig den zentral angeordneten, ungefärbten Leerbereich ausfüllt.

2. Vorrichtung nach Anspruch 1, bei der das erste Bild auf eine Oberfläche des Blattes aus transparentem Material aufgebracht ist und das zweite Bild auf das erste Bild aufgebracht ist, derart, daß das zweite Bild vollständig den zentral angeordneten, ungefärbten Leerbereich füllt.

3. Vorrichtung nach Anspruch 2, bei dem die entgegengesetzten Oberflächen des Blattes aus transparentem Material eine Frontoberfläche und eine Rückoberfläche bilden und bei dem die ersten und zweiten Bilder auf die Rückoberfläche aufgebracht sind.

4. Vorrichtung nach Anspruch 1, bei der das Blatt aus transparentem Material eine erste transparente Materialschicht und ein transparentes Laminat mit einer ersten Seite, auf der die mehrfarbigen Linien ausgebildet sind, und mit einer entgegengesetzten zweiten Seite aufweist, die zum Anheften der ersten transparenten Materialschicht strukturiert ist.

5. Vorrichtung nach Anspruch 4, bei der das erste Bild auf die erste Seite des Laminates und das zweite Bild auf das erste Bild aufgebracht ist, um den zentral angeordneten ungefärbten Leerbereich im ersten Bild vollständig auszufüllen.

6. Vorrichtung nach Anspruch 1, bei dem die eine oder die mehreren mehrfarbigen kontinuierlichen Linien integriert geformte mehrfarbige Staffelungen einschließen, die sich davon seitwärts erstrecken.

7. Vorrichtung nach Anspruch 1, bei dem die entgegengesetzten Oberflächen eine Frontoberfläche und eine Rückoberfläche aufweisen und das erste Bild auf der Frontoberfläche und das zweite Bild auf das erste Bild aufgebracht sind derart, daß das zweite Bild vollständig den Leerbereich im ersten Bild ausfüllt.

8. Transparente Meßvorrichtung zur Anwendung beim Messen, Markieren und Schneiden von Material umfassend:
ein Blatt aus transparentem Material mit entgegengesetzten Oberflächen;
eine oder mehrere zusammengesetzte, kontinuierliche Linien, die auf dem Blatt aus transparentem Material geformt sind, wobei jede zusammengesetzte kontinuierliche Linie ein erstes Bild und ein zweites Bild aufweist, das erste und das zweite Bild aus kontrastierenden Farben geformt sind, das erste Bild so geformt ist, daß es mindestens eine Linie mit einem gefärbten Bereich und mit einem zentral angeordneten, länglichen, ungefärbten Bereich innerhalb des gefärbten Bereiches aufweist und daß das zweite Bild mindestens einen gefärbten Bereich aufweist, der so bemessen und geformt ist, daß er mindestens vollständig den mindestens einen ungefärbten Bereich ausfüllt.

9. Vorrichtung nach Anspruch 8, bei dem eine oder mehrere der zusammengesetzten kontinuierlichen Linien integriert geformte zusammengesetzte Staffelungen aufweist, die sich davon seitwärts erstrecken.

10. Vorrichtung nach Anspruch 8, bei dem das Blatt aus transparentem Material eine Frontoberfläche und eine Rückoberfläche aufweist und die eine oder die mehreren zusammengesetzten Linien auf der Rückoberfläche aufgebracht sind.

11. Vorrichtung nach Anspruch 8, bei der das erste Bild auf die Rückoberfläche und das zweite Bild auf das erste Bild aufgebracht sind, um den mindestens einen ungefärbten Bereich vollständig auszufüllen.

12. Vorrichtung nach Anspruch 11, bei dem die zusammengesetzten Linien je ein drittes Bild gleicher Farbe wie das erste Bild umfassen, wobei das dritte Bild so bemessen und geformt ist, daß es nicht größer als das erste Bild ist, und wobei das dritte Bild auf das erste und das zweite Bild aufgebracht ist.

13. Vorrichtung nach Anspruch 8, bei dem das Blatt aus transparentem Material eine Frontoberfläche und eine Rückoberfläche aufweist, und wobei die eine oder die mehreren zusammengesetzten Linien auf die Frontoberfläche aufgebracht sind.

14. Vorrichtung nach Anspruch 13, bei dem das zweite Bild auf die Frontoberfläche und das erste Bild auf das zweite Bild aufgebracht sind derart, daß das zweite Bild vollständig den mindestens einen ungefärbten Bereich in dem ersten Bild ausfüllt.

15. Vorrichtung nach Anspruch 8, bei dem das Blatt aus transparenterm Material eine erste transparente Materialschicht und eine dünne transparente Schicht aufweist, die an der ersten transparenten Materialschicht fixiert ist, wobei auf der dünnen transparenten Schicht die eine oder die mehreren zusammengesetzten Linien geformt sind.

16. Vorrichtung nach Anspruch 15, bei dem die erste transparente Materialschicht eine Frontoberfläche und eine Rückoberfläche aufweist und bei der die dünne transparente Schicht an der Frontoberfläche der Schicht aus transparentem Material befestigt ist.

17. Vorrichtung nach Anspruch 15, bei der die erste transparente Materialschicht eine Frontoberfläche und eine Rückoberfläche aufweist und die dünne transparente Schicht an der Rückoberfläche befestigt ist.

18. Verfahren zum Formen kontinuierlicher, mehrfarbiger, zusammengesetzter Linien auf einer transparenten Meßvorrichtung, umfassend die folgenden Schritte:
Formen eines ersten Bildes umfassend eine oder mehrere gefärbte Bereich mit einem oder mehreren zentral darin angeordneten ungefärbten Bereichen und Formen eines zweiten Bildes mit einem oder mehreren gefärbten Bereichen, die so bemessen und geformt sind, daß sie zumindest vollständig einen oder mehrere der ungefärbten Bereiche im ersten Bild ausfüllen; und
Übertragen des ersten und des zweiten Bildes auf das Blatt aus transparentem Material, um ein zusammengesetztes Bild zu erzeugen, wobei das erste Bild und das zweite Bild in kontrastierenden Farben gehalten sind und das zweite Bild mindestens vollständig dem einen oder die mehreren ungefärbten Bereiche des ersten Bildes mit einer kontrastierenden Farbe ausfüllen.

19. Verfahren nach Anspruch 18, bei dem das Formen des ersten und des zweiten Bildes ferner das Formen eines dritten Bildes umfaßt, welches so bemessen und geformt ist, daß es nicht größer als das erste Bild ist, und wobei der Schritt des Übertragens ferner das Übertragen des dritten Bildes auf das Blatt aus transparentem Material umfaßt, so daß das dritte Bild dem ersten und dem zweiten Bild Überlagert wird und von gleicher Farbe wie das erste Bild ist.

20. Verfahren nach Anspruch 18, bei dem das Formen des ersten und des zweiten Bildes ferner das elektronische Erzeugen des ersten und des zweiten Bildes und Speichern der elektronisch erzeugten Bilder in einer elektronischen Speichervorrichtung umfaßt und der Schritt des Übertragens des ersten und des zweiten Bildes ferner das Übertragen der elektronisch gespeicherten Bilder auf das Blatt aus transparentem Material umfaßt.

21. Verfahren nach Anspruch 18, bei dem das Übertragen des ersten und des zweiten Bildes das Aufbringen des ersten Bildes auf einen ersten Schirm und das Aufbringen des zweiten Bildes auf einen zweiten Schirm umfaßt und darauf der Schirmdruckprozess dazu eingesetzt wird, die Bilder auf den ersten und den zweiten Schirm auf das Blatt aus transparentem Material zu übertragen.

22. Verfahren nach Anspruch 19, bei dem die Schritte des Übertragens des ersten und des zweiten Bildes das Aufbringen des ersten Bildes auf einen ersten Schirm, das Aufbringen des zweiten Bildes auf einen zweiten Schirm, das Aufbringen des dritten Bildes auf einen dritten Schirm und das Nutzen des Schirmdruckprozesses zum Aufbringen des Bildes auf dem ersten Schirm auf die Rückoberfläche des Blattes aus transparentem Material, darauf zum Aufbringen des Bildes auf dem zweiten Schirm auf das erste Bild auf der Rückenfläche des Blattes aus transparentem Material und darauf zum Aufbringen des dritten Bildes auf das zweite und das erste Bild auf der Rückenfläche des Blattes aus transparentem Material umfassen.

23. Verfahren nach Anspruch 18, bei dem das Übertragen des ersten und des zweiten Bildes das Aufbringen des ersten Bildes auf einen ersten Schirm und das Aufbringen des zweiten Bildes auf einen zweiten Schirm und darauf das Nutzen des Schirmdruckprozesses zum Aufbringen des zweiten Bildes auf dem zweiten Schirm auf die Frontoberfläche des Blattes aus transparentem Material und darauf zum Aufbringen des ersten Bildes auf dem ersten Schirm auf die Frontoberfläche des Blattes aus transparentem Material umfaßt.

## Revendications

1. Dispositif de mesure transparent, comportant :
une feuille de matière transparente ayant des surfaces opposées ;
au moins une ou plusieurs lignes composites continues multicolores appliquées sur l'une desdites surfaces opposées de ladite feuille, chacune desdites lignes continues multicolores comportant une première image et une seconde image, la première image et la seconde image ayant des couleurs contrastantes, ladite première image comprenant au moins une ligne ayant une zone colorée avec une zone vierge non colorée disposée centralement et formée à l'intérieur de ladite zone colorée et ladite seconde image étant dimensionnée et configurée pour remplir au moins complètement ladite zone vierge non colorée disposée centralement.

2. Dispositif selon la revendication 1, dans lequel ladite première image est appliquée à une surface de ladite feuille de matière transparente et ladite seconde image est appliquée sur le dessus de ladite première image de façon que ladite seconde image remplisse complètement ladite zone vierge non colorée disposée centralement.

3. Dispositif selon la revendication 2, dans lequel lesdites surfaces opposées de ladite feuille de matière transparente comprennent une surface avant et une surface arrière, et dans lequel lesdites première et seconde images sont appliquées sur ladite surface arrière.

4. Dispositif selon la revendication 1, dans lequel ladite feuille de matière transparente comprend une première feuille transparente de matière et un stratifié transparent ayant un premier côté sur lequel sont formées lesdites lignes multicolores et un second côté, opposé, structuré de façon à être attaché à ladite première feuille transparente de matière.

5. Dispositif selon la revendication 4, dans lequel ladite première image est appliquée audit premier côté dudit stratifié et ladite seconde image est appliquée sur ladite première image pour remplir complètement ladite zone vierge non colorée disposée centralement dans ladite première image.

6. Dispositif selon la revendication 1, dans lequel lesdites une ou plusieurs lignes continues multicolores comprennent des graduations multicolores formées de façon intégrée, qui en partent latéralement.

7. Dispositif selon la revendication 1, dans lequel lesdites surfaces opposées comprennent une surface avant et une surface arrière, et dans lequel ladite première image est appliquée à ladite surface avant et ladite seconde image est appliquée sur ladite première image de façon que ladite seconde image remplisse complètement ladite zone vierge dans ladite première image.

8. Dispositif de mesure transparent destiné à être utilisé dans la mesure, le marquage et la coupe de matière, comportant :
une feuille de matière transparente ayant des surfaces opposées ;
une ou plusieurs lignes continues composites formées sur ladite feuille de matière transparente, chacune desdites lignes continues composites comportant une première image et une seconde image, lesdites première et seconde images étant formées de couleurs contrastantes, ladite première image étant formée de façon à avoir au moins une ligne avec une zone colorée et avec une zone non colorée longitudinale disposée centralement, formée à l'intérieur de ladite zone colorée, et ladite seconde image ayant au moins une zone colorée dimensionnée et configurée pour remplir au moins complètement ladite, au moins une, zone non colorée.

9. Dispositif selon la revendication 8, dans lequel une ou plusieurs desdites lignes continues composites comprennent des graduations composites formées de façon intégrée, qui en partant latéralement.

10. Dispositif selon la revendication 8, dans lequel ladite feuille de matière transparente présente une surface avant et une surface arrière, et dans lequel lesdites une ou plusieurs lignes composites sont formées sur ladite surface arrière.

11. Dispositif selon la revendication 8, dans lequel ladite première image est appliquée à ladite surface arrière et ladite seconde image est appliquée à ladite première image pour remplir complètement ladite, au moins une, zone non colorée.

12. Dispositif selon la revendication 11, dans lequel lesdites lignes composites comprennent chacune une troisième image de la même couleur que ladite première image et dimensionnée et configurée de façon à ne pas être plus grande que ladite première image, et dans lequel ladite troisième image est appliquée sur lesdites première et seconde images.

13. Dispositif selon la revendication 8, dans lequel ladite feuille de matière transparente présente une surface avant et une surface arrière, et dans lequel lesdites une ou plusieurs lignes composites sont appliquées à ladite surface avant.

14. Dispositif selon la revendication 13, dans lequel ladite seconde image est appliquée à ladite surface avant et ladite première image est appliquée sur ladite seconde image de façon que ladite seconde image remplisse complètement ladite, au moins une, zone non colorée dans ladite première image.

15. Dispositif selon la revendication 8, dans lequel ladite feuille de matière transparente comprend une première feuille transparente de matière et une feuille transparente mince fixée à ladite première feuille transparente de matière, ladite feuille transparente mince ayant lesdites une ou plusieurs lignes composites formées sur elle.

16. Dispositif selon la revendication 15, dans lequel ladite première feuille transparente de matière présente une surface avant et une surface arrière, et dans lequel ladite feuille transparente mince est fixée à ladite surface avant de ladite feuille de matière transparente.

17. Dispositif selon la revendication 15, dans lequel ladite première feuille transparente de matière présente une surface avant et une surface arrière, et dans lequel ladite feuille transparente mince est fixée à ladite surface arrière.

18. Procédé de formation de lignes composites multicolores continues sur un dispositif de mesure transparent, comprenant les étapes dans lesquelles :
on forme une première image comportant une ou plusieurs zones colorées avec une ou plusieurs zones non colorées disposées centralement dans celles-ci et on forme une seconde image ayant une ou plusieurs zones colorées dimensionnées et configurées pour remplir au moins complètement une ou plusieurs des zones non colorées dans la première image ; et
on transfère les première et seconde images sur la feuille de matière transparente pour former une image composite, où la première image et la seconde image sont de couleurs contrastantes et la seconde image remplit au moins complètement la ou plusieurs des zones non colorées de la première image avec une couleur contrastante.

19. Procédé selon la revendication 18, dans lequel la formation des première et seconde images comprend en outre la formation d'une troisième image dimensionnée et configurée de façon à ne pas être plus grande que la première image, et l'étape de transfert comprend en outre le transfert de la troisième image à la feuille de matière transparente afin que la troisième image soit appliquée sur les première et seconde images et soit de la même couleur que la première image.

20. Dispositif selon la revendication 18, dans lequel la formation des première et seconde images comprend en outre la formation électronique des première et seconde images et le stockage des images, créées électroniquement, sur un dispositif de stockage électronique, et dans lequel ladite étape de transfert des première et seconde images comprend en outre le transfert des images, stockées électroniquement, à la feuille de matière transparente.

21. Procédé selon la revendication 18, dans lequel le transfert des première et seconde images comprend l'application de la première image à un premier écran et l'application de la seconde image à un second écran, puis l'utilisation du processus d'impression par écran pour appliquer sur la feuille de matière transparente les images situées sur les premier et second écrans.

22. Procédé selon la revendication 19, dans lequel les étapes de transfert des première et seconde images comprennent les étapes d'application de la première image à un premier écran, d'application de la deuxième image à un deuxième écran, d'application de la troisième image à un troisième écran, et d'utilisation du processus d'impression par écrans pour appliquer, sur la surface arrière de la feuille de matière transparente, l'image située sur le premier écran, puis pour appliquer, sur la première image sur la surface arrière de la feuille de matière transparente, l'image se trouvant sur le deuxième écran, et puis pour appliquer la troisième image sur les deuxième et première images sur la surface arrière de la feuille de matière transparente.

23. Procédé selon la revendication 18, dans lequel le transfert des première et seconde images comprend l'application de la première image à un premier écran et l'application de la seconde image à un second écran, puis l'utilisation du processus d'impression par écrans pour appliquer à la surface avant de la feuille de matière transparente la seconde image située sur le second écran, et puis pour appliquer à la surface avant de la feuille de matière transparente la première image se trouvant sur le premier écran.
